(19) Europäisches Patentamt
European Patent Office
Office européen des brevets

(11) EP 0 650 208 B1

(12) **FASCICULE DE BREVET EUROPEEN**

(45) Date de publication et mention de la délivrance du brevet:
**10.06.1998 Bulletin 1998/24**

(51) Int Cl.⁶: **H01M 4/60**, H01M 10/40, C08G 65/32, C08G 65/48

(21) Numéro de dépôt: **94402335.7**

(22) Date de dépôt: **18.10.1994**

(54) **Matériau cathodique pour générateur électrochimique**

Kathodenmaterial für elektrochemische Batterie

Cathode material for electrochemical battery

(84) Etats contractants désignés:
**DE DK FR GB IT**

(30) Priorité: **21.10.1993 FR 9312570**

(43) Date de publication de la demande:
**26.04.1995 Bulletin 1995/17**

(73) Titulaire: **ALCATEL ALSTHOM COMPAGNIE GENERALE D'ELECTRICITE
75008 Paris (FR)**

(72) Inventeurs:
- **Andrieu, Xavier
F-91220 Bretigny Sur Orge (FR)**
- **Rambla, Béatrice
F-91120 Palaiseau (FR)**

(74) Mandataire:
**Pothet, Jean Rémy Emile Ludovic et al
ALCATEL ALSTHOM,
Département de Propriété Industrielle,
30, avenue Kléber
75116 Paris (FR)**

(56) Documents cités:

| | |
|---|---|
| **EP-A- 0 415 856** | **EP-A- 0 424 827** |
| **WO-A-91/06132** | **WO-A-91/13472** |
| **GB-A- 2 158 987** | **US-A- 4 833 048** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un matériau cathodique pour générateurs électrochimiques, elle s'étend en outre à son procédé de préparation et aux générateurs contenant ce matériau.

Dans un générateur électrochimique, deux propriétés sont essentielles: la conductivité électronique et la conductivité ionique. La conductibilité électronique est assurée dans les électrodes par le noir de carbone de grande surface spécifique qu'elles comportent généralement. La conductibilité ionique est assurée par un électrolyte liquide ou solide polymère et nécessite une quantité importante de matière. Les électrodes contiennent en outre un composé rédox, siège de la réaction électrochimique.

On connait les piles à cathode liquide dont la cathode est constituée d'un collecteur de courant, généralement du noir de carbone, et d'un matériau électroactif qui est l'électrolyte lui-même. L'électrolyte liquide joue à la fois le rôle de composé redox et de conducteur ionique. Pour obtenir un fonctionnement satisfaisant, il est indispensable que l'électrolyte soit en contact avec toute la surface du conducteur électronique. L'imprégnation du collecteur de courant par l'électrolyte liquide est une opération délicate qui pose des problèmes de reproductibilité.

Le brevet WO-91/13472 décrit un matériau polymère organosoufré conducteur ionique. Ce polymère est obtenu par substitution de groupes S et/ou NR à une partie des atomes d'oxygène d'une structure polyéther. Dans les groupe NR, R comprend des sites électronégatifs capable de s'associer à un cation pour permettre la conductivité ionique du polymère. Ce polymère est utilisable dans une électrode comme électrolyte solide.

De nombreux composés organosoufrés, notamment des polymères $(SRS)_n$ ont fait l'objet d'étude en tant que matériaux de cathode. Il se comportent comme des composés rédox, c'est à dire qu'ils se dépolymérisent lors du passage d'un courant, puis se repolymérisent lors du passage en sens inverse. Cette réaction s'écrit:

$$(SRS)_n + 2n\,e^- \underset{\text{électropolymérisation/oxydation}}{\overset{\text{électrodépolymérisation/réduction}}{\rightleftarrows}} n\,(SRS)^-$$

Un exemple de ce type de matériau est mentionné dans le brevet WO-91/06132. L'électrode positive de générateur secondaire qui est décrite comporte une matière électroactive qui est un polymère rédox organosoufré, du noir de carbone comme conducteur, ainsi que de l'électrolyte polymère solide (PEO). L'inconvénient d'une telle électrode est qu'en l'absence d'électrolyte, la conductibilité ionique est pratiquement nulle. Or le volume occupé par l'électrolyte diminue d'autant la quantité de matière électroactive contenue dans l'électrode, donc la capacité spécifique du générateur.

La présente invention concerne en particulier une électrode de générateur électrochimique à base d'un matériau polymère de capacité spécifique et volumique améliorée par rapport aux électrodes connues.

La présente invention a pour but de proposer une électrode de générateur électrochimique dans laquelle la proportion de matière électroactive est notablement augmentée.

L'objet de la présente invention est une électrode de générateur électrochimique comportant un premier composé conducteur électronique et un deuxième composé conducteur ionique qui est un polymère soufré, dont le motif élémentaire comprend un polyéther, et susceptible de contenir un sel ionisable, caractérisée par le fait que ledit deuxième composé remplit en outre la fonction de matière électroactive, ledit polymère comportant dans la chaîne principale des liaisons soufre-soufre le rendant capable de s'oxyder et de se réduire de manière réversible

Le deuxième composé joue simultanément le rôle de matière électroactive en se dépolymérisant et en se repolymérisant, et de conducteur ionique en complexant un sel ionisable. Il n'est donc pas nécessaire d'introduire un troisième composé dans l'électrode pour remplir soit la fonction de composé redox, soit celle de conducteur ionique.

Les produits organosoufrés de l'art antérieur comportent des liaisons -S-S- greffées sur des chaînes alkyles qui n'apportent aucune propriété utile du point de vue électrochimique, et de plus diminuent la capacité spécifique à cause de leur masse moléculaire élevée. L'avantage de la présente invention est que le squelette carboné portant les liaisons -S-S- est lui-même conducteur ionique lorsqu'un sel ionisable est incorporé dans sa structure. De ce fait le deuxième composé est à la fois conducteur ionique et composé rédox.

Selon un mode de réalisation préférentiel de l'invention, le deuxième composé est constitué d'un polymère dont le motif élémentaire est un polyéther à deux fonctions terminales amines ternaires soufrées de la forme:

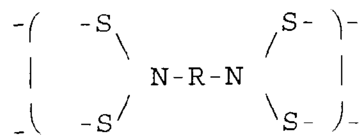

où R est un polyéther.

De préférence encore, ledit polyéther est choisi parmi le polyoxyde d'éthylène (PEO), le polyoxyde de propylène (PPO), et leurs copolymères statistiques, alternés, séquencés et greffés de polyéthers.

La masse molaire dudit polyéther est comprise entre 100 et 100 000.

Le sel inorganique est ajouté dans une proportion comprise entre 5% et 25% en poids de la masse du polymère, et de préférence dans une proportion comprise entre 10% et 20% en poids.

Le sel, ou mélange de sels, est de la forme $M^+X^-$, où $M^+$ est au moins un cation choisi parmi $Li^+$, $Na^+$, $K^+$, $NH^+_4$, $Mg^{2+}$, $Ca^{2+}$, et $X^-$ est au moins un anion choisi parmi $ClO^-_4$, $AsF^-_6$, $PF^-_6$, $BF^-_4$, $CF_3SO^-_3$, $N(CF_3SO_2)^-_2$, $C(CF_3SO_2)^-_3$.

La proportion dudit premier composé est comprise entre 2% et 50% en poids du mélange des deux composés, de préférence entre 5% et 30% en poids, et de préférence encore entre 5% et 15% en poids.

Le premier composé est choisi parmi le noir de carbone, de préférence de grande surface spécifique comme le noir "KETJEN" ou le noir d'acétylène, le charbon actif et le graphite.

L'électrode selon l'invention est réalisée en effectuant le mélange du premier composé conducteur électronique, du deuxième composé polymère et du sel inorganique en présence d'un solvant, puis en étalant ce mélange sur un support et en évaporant le solvant.

Selon un procédé de réalisation préférentiel, le deuxième composé est préparé en faisant réagir un polyéther à deux fonctions terminales amines primaires avec du monochlorure de soufre $S_2Cl_2$ en présence de triéthylamine $N(C_2H_5)_3$ en excès pour piéger l'acide chlorhydrique généré lors de la synthèse, suivant la réaction:

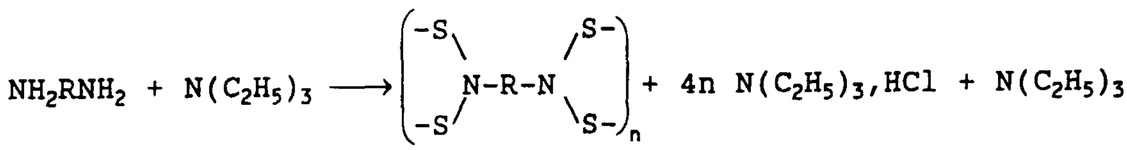

La réaction de polymérisation peut conduire à des réseaux monodimensionnels, bidimensionnels ou tridimensionnels avec des liaisons -S-S- intermoléculaires ou intramoléculaires, que l'on peut représenter de la manière suivante:

intramoléculaire

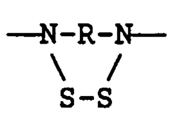

intermoléculaire

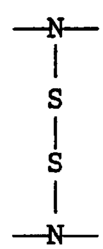

Une électrode selon la présente invention est plus particulièrement destinée à être utilisée dans un générateur électrochimique au lithium comportant un électrolyte composé d'une sel de lithium dissous dans un solvant non aqueux. Le sel de lithium est par exemple choisi parmi le perchlorate de lithium, le trifluorométhanesulfonate de lithium et le trifluorométhanesulfonimide de lithium.

L'invention sera mieux comprise et d'autres avantages et particularités apparaîtront à la lecture des exemples suivants de modes de réalisation, donnés bien entendu à titre illustratif mais nullement limitatif, accompagnés du dessin annexé dans lequel:

- la figure 1A est le spectre obtenu par spectroscopie infra-rouge pour le polyoxyde de propylène, en abscisse est

donnée la longueur d'onde λ en $cm^{-1}$ et en ordonnée la transmittance T qui est un nombre sans dimension,

- la figure 1B, analogue à la figure 1A est le spectre obtenu par spectroscopie infra-rouge pour un polymère organosoufré selon l'invention fabriqué à partir du polyéther de la figure 1A,
- la figure 2A est le spectre obtenu par résonnance magnétique nucléaire pour le polyoxyde de propylène, en abscisse est donnée le déplacement chimique δ en ppm et en ordonnée l'amplitude du signal S qui est un nombre sans dimension,
- la figure 2B, analogue à la figure 2A est le spectre obtenu par résonnance magnétique nucléaire pour un polymère organosoufré selon l'invention fabriqué à partir du polyéther de la figure 2A,
- la figure 3 montre la courbe de décharge galvanostatique du polymère organosoufré selon l'invention des figures 1B et 2B, en abscisse est donné le temps de décharge t en heures et en ordonnée la tension V en volts,
- la figure 4A, analogue à la figure 1A, est le spectre obtenu par spectroscopie infra-rouge pour le polyoxyde d'éthylène,
- la figure 4B, analogue à la figure 4A, est le spectre obtenu par spectroscopie infra-rouge pour un polymère organosoufré selon l'invention fabriqué à partir du polyéther de la figure 4A,
- la figure 5A, analogue à la figure 2A, est le spectre obtenu par résonnance magnétique nucléaire pour le polyoxyde d'éthylène,
- la figure 5B, analogue à la figure 5A, est le spectre obtenu par résonnance magnétique nucléaire pour un polymère organosoufré selon l'invention fabriqué à partir du polyéther de la figure 5A,
- la figure 6, analogue à la figure 3, montre la courbe de décharge galvanostatique du polymère organosoufré selon l'invention des figures 4B et 5B,
- la figure 7 représente un générateur comportant une électrode selon l'invention,
- la figure 8, analogue à la figure 6, montre la courbe de décharge galvanostatique d'un générateur comportant une électrode selon l'invention.

EXEMPLE 1

Selon la présente invention, on prépare le polymère organosoufré de capacité spécifique théorique 102Ah/Kg et de formule:

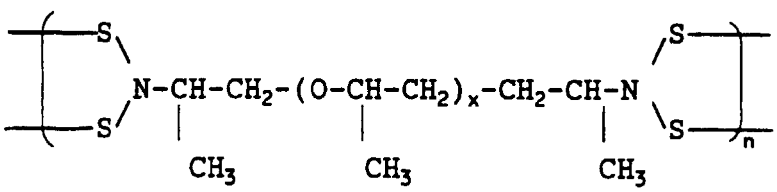

Dans un ballon de 250ml, on introduit 10g de diamine de polyoxyde de propylène (PPO), de référence "JEFFAMINE 400" de la société TEXACO, de formule:

$$NH_2\text{-}CHCH_3\text{-}CH_2\text{-}(O\text{-}CHCH_3\text{-}CH_2)_x\text{-}CH_2\text{-}CHCH_3\text{-}NH_2$$

où x est en moyenne compris entre 5 et 6. On y ajoute 30ml de triéthylamine $N(C_2H_5)_3$ et 50ml de chloroforme $CHCl_3$.

Au milieu réactionnel maintenu sous agitation, on additionne goutte à goutte 4ml de monochlorure de soufre $S_2Cl_2$ préalablement dissout dans 20$cm^3$ de chloroforme $CHCl_3$. Le ballon est maintenu sous agitation magnétique pendant 24 heures à 20°C.

L'avancement de la réaction est suivi par chromatographie sur couche mince en utilisant une plaque de silice de référence "60 F254" de la société MERCK et un éluant constitué de 95% en volume de dichlorure de méthylène $CH_2Cl_2$ et de 5% en volume de méthanol $CH_3OH$. Lorsque la réaction est achevée, les solvants sont évaporés et le mélange réactionnel est versé dans un litre d'acétone fortement agité. Puis la solution obtenue est filtrée et l'acétone est évaporée sous vide primaire à 50°C pendant une nuit. Le polymère se présente sous la forme d'un composé marron collant. Le rendement de la synthèse est de 80%.

L'analyse par spectrométrie infra-rouge est effectuée à l'aide d'un appareil de référence "IR 4240" de la société BECKMANN. Le spectre du produit de départ est représenté sur la figure 1A. Le spectre du produit organo soufré obtenu, visible sur la figure 1B, montre la disparition des bandes de l'amine primaire (bandes $\nu_a$, $\delta_a$ et $\delta_s$ caractéristiques

de la fonction $NH_2$ autour de 3300cm$^{-1}$) et l'apparition d'une bande $\nu_{S-H}$ à 2500cm$^{-1}$, la bande $\nu_{S-S}$ n'est pas observable dans le domaine d'analyse de cet appareil.

L'analyse par résonnance magnétique nucléaire (RMN) est effectuée à l'aide d'un appareil de référence "EM-360" de la société VARIAN à une fréquence de 60MHz. Le spectre obtenu obtenu pour le produit de départ est représenté sur la figure 2A. Le spectre du produit obtenu visible sur la figure 2B montre la disparition du pic P à 1,8ppm qui est celui de l'amine primaire, il y a donc eu transformation des liaisons N-H.

Les mesures de conductivité ionique ont été réalisées à l'aide de deux pastilles de nickel. Au polymère préparé ci-dessus, on ajoute 10% en poids de perchlorate de lithium $LiClO_4$. Le mélange est dilué dans l'éthanol, appliqué sur une pastille de nickel, et séché sous vide primaire à température ambiante. On mesure une conductivité de $10^{-6}$S.cm$^{-1}$ à 25°C, valeur comparable à celles obtenues pour la plupart des électrolytes polymères solides.

Un échantillon de 80mg du polymère préparé précédemment est dissout dans 400mg d'un électrolyte liquide dont le solvant est le carbonate de propylène PC et le sel est le perchlorate de lithium $LiClO_4$ à une concentration molaire (1M). Un support collecteur de courant, constitué de poudre de noir de carbone liée par du polytétrafluoroéthylène (PTFE), est imprégné par cette solution. L'électrode ainsi réalisée est placée, face à une contre-électrode de lithium, dans une cellule de test, de type bouton, contenant l'électrolyte.

La mesure de la capacité du polymère est effectuée à une température de 60°C par décharge galvanostatique, représentée par la courbe 30 de la figure 3, à une densité de courant de 50µA/cm$^2$ d'électrode. On obtient une capacité spécifique de 72Ah/Kg de polymère organosoufré, soit un rendement de 70%.

EXEMPLE 2

Selon la présente invention, on prépare le polymère organosoufré de capacité spécifique théorique 391Ah/Kg et de formule:

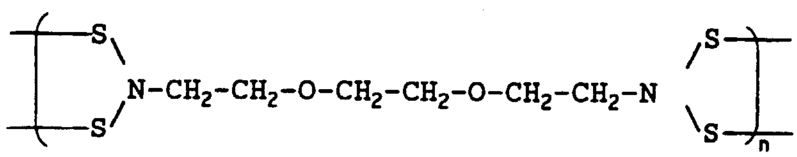

La synthèse de ce polymère est effectuée de manière analogue à l'exemple 1 à partir d'une diamine de polyoxyde d'éthylène (PEO), de référence "EDR 148" de la société TEXACO, de formule:

$$NH_2\text{-}CH_2\text{-}CH_2\text{-}O\text{-}CH_2\text{-}CH_2\text{-}O\text{-}CH_2\text{-}CH_2\text{-}NH_2$$

On obtient un produit marron collant qui est séché sous vide primaire avant d'être utilisé.

Lors de l'analyse par spectrométrie infra-rouge, on obtient le spectre du produit de départ représenté sur la figure 4A. Le spectre du produit organosoufré, visible sur la figure 4B, montre la disparition des raies $\nu'_a$, $\delta'_a$ et $\delta'_s$ caractéristiques de l'amine primaire et l'apparition de celle de la liaison S-H, représentée par $\nu'_{S-H}$.

L'analyse par résonnance magnétique nucléaire du produit organosoufré (figure 5B) montre la disparition du pic P' de l'amine primaire à 1,5ppm visible sur le spectre du produit de départ (figure 5A) signifiant la transformation des liaisons N-H.

La conductivité ionique mesurée comme décrit dans l'exemple 1 donne $10^{-7}$S.cm$^{-1}$ à 25°C.

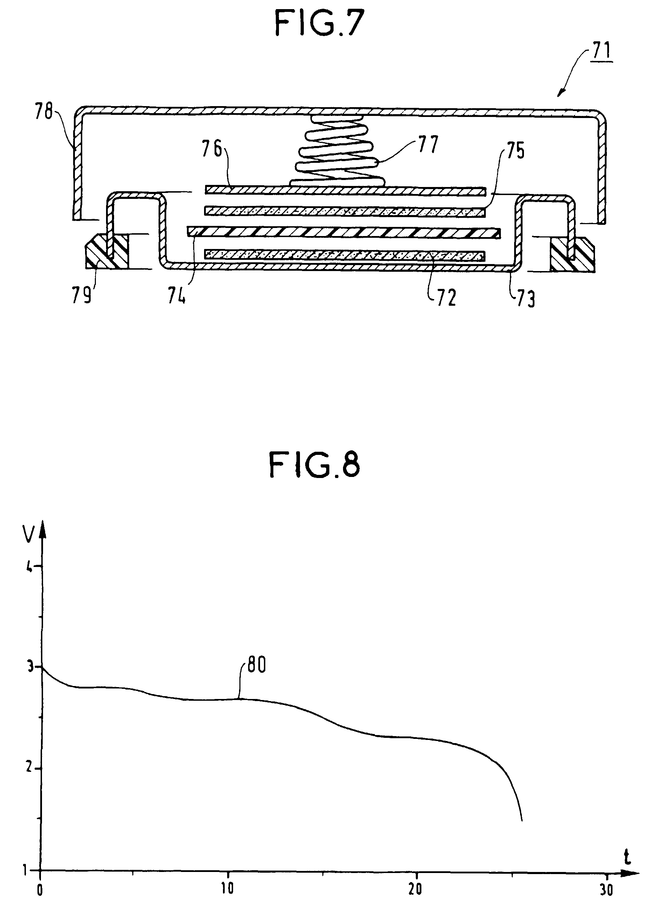

La capacité spécifique est mesurée de la manière décrite dans l'exemple 1 et représentée sur la courbe 60 de la figure 6. Elle est de 190Ah/Kg de polymère organosoufré, soit un rendement de 48%.

EXEMPLE 3

On assemble un générateur électrochimique de type bouton 71 tel que représenté sur la figure 7 comportant une cathode 72 selon l'invention réalisée de la manière suivante. Dans l'éthanol $C_2H_5OH$, on effectue le mélange de 5mg de noir de carbone, de 50mg du polymère souffré préparé dans l'exemple 2, et de 5mg du sel $LiClO_4$. Puis on étale une partie de ce mélange sur un collecteur de courant, constitué par la coupelle métallique 73 du générateur électrochimique 71, et on évapore l'éthanol. On obtient une cathode 72 de 10µm d'épaisseur et contenant 7mg de polymère.

Le séparateur 74, d'épaisseur 100µm, est constitué d'un film de polyoxyde d'éthylène (PEO) de masse élevée (900 000). Il est réalisé en dissolvant dans l'acétonitrile 10% en poids du sel $LiClO_4$ par rapport au PEO. La solution

est versée dans un moule et l'acétonitrile est évaporé à température ambiante. Le film obtenu est ensuite découpé sous forme de pastille de 20mm de diamètre, puis séché sous vide primaire pendant 2 heures.

Sur ce séparateur 74 sont déposées une pastille de lithium servant d'anode 75, de diamètre 12mm, et une cale 76 en inox assurant la reprise du courant. Un ressort 77 maintient le contact entre les éléments. L'ensemble est recouvert par un couvercle 78 et un joint 79 assure l'étanchéité du générateur.

La capacité du générateur est mesurée par décharge galvanostatique représentée par la courbe 80 de la figure 8, sous 50µA/cm$^2$ de cathode à une température de 60°C. La capacité mesurée est de 185Ah/Kg de polymère organosoufré soit un rendement de 47%.

**Revendications**

1. Electrode de générateur électrochimique comportant un premier composé conducteur électronique et un deuxième composé conducteur ionique qui est un polymère soufré, dont le motif élémentaire comprend un polyéther, et susceptible de contenir un sel ionisable, caractérisée par le fait que ledit deuxième composé remplit en outre la fonction de matière électroactive, ledit polymère comportant dans la chaîne principale des liaisons soufre-soufre le rendant capable de s'oxyder et de se réduire de manière réversible.

2. Electrode selon la revendication 1, dans laquelle ledit motif élémentaire est un polyéther à deux fonctions terminales amines ternaires soufrées de la forme:

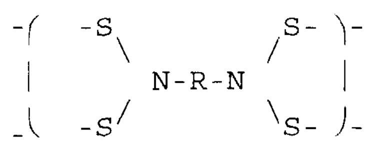

où R est un polyéther.

3. Electrode selon l'une des revendications 1 et 2, dans laquelle ledit polyéther est choisi parmi le polyoxyde d'éthylène, le polyoxyde de propylène, leurs copolymères statistiques, alternés, séquencés et greffés de polyéthers

4. Electrode selon l'une des revendications précédentes, dans laquelle la masse molaire dudit polyéther est comprise entre 100 et 100 000.

5. Electrode selon l'une des revendications précédentes, caractérisée par le fait que ledit sel est ajouté dans une proportion comprise entre 5% et 25% en poids de la masse de polymère.

6. Electrode selon l'une des revendications précédentes, caractérisée par le fait que ledit sel est de la forme $M^+X^-$, où $M^+$ est au moins un cation choisi parmi $Li^+$, $Na^+$, $K^+$, $NH_4^+$, $Mg^{2+}$, $Ca^{2+}$, et $X^-$ est au moins un anion choisi parmi $ClO_4^-$, $AsF_6^-$, $PF_6^-$, $BF_4^-$, $CF_3SO_3^-$, $N(CF_3SO_2)_2^-$, $C(CF_3SO_2)_3^-$.

7. Electrode selon l'une des revendications précédentes, caractérisée par le fait que la proportion dudit premier composé est comprise entre 2 et 50% en poids du mélange dudit premier et dudit deuxième composé.

8. Electrode selon l'une des revendications précédentes, caractérisée par le fait que ledit premier composé est choisi parmi le noir de carbone, le charbon actif, et le graphite.

9. Procédé de réalisation d'une électrode selon l'une des revendications précédentes, dans lequel ledit deuxième composé est préparé en faisant réagir un polyéther à deux fonctions terminales amines primaires avec du monochlorure de soufre en présence de triéthylamine.

10. Générateur électrochimique au lithium comportant une électrode selon l'une des revendications 1 à 8.

## Patentansprüche

1. Elektrode einer elektrochemischen Batterie, mit einer ersten, elektronenleitfähigen Verbindung und einer zweiten, ionenleitfähigen Verbindung, die ein schwefelhaltiges Polymer ist, dessen Elementarmuster ein Polyether umfaßt, und in der Lage ist, ein ionisierbares Salz zu enthalten, dadurch gekennzeichnet, daß die zweite Verbindung ferner die Funktion eines elektroaktiven Materials erfüllt, wobei das Polymer in der Hauptkette Schwefel-Schwefelbindungen enthält, die es in die Lage versetzen, sich reversibel zu oxidieren und zu reduzieren.

2. Elektrode nach Anspruch 1, bei der das Elementarmuster ein Polyether mit zwei schwefelhaltigen endständigen ternären Aminfunktionen der Form:

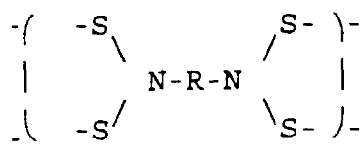

ist, wobei R ein Polyether ist.

3. Elektrode nach einem der Ansprüche 1 und 2, bei der der Polyether unter Etylenpolyoxid, Polypropylenoxid, deren statistischen, alternierenden, sequenzierten und Polyethergepfropften Copolymeren ausgewählt ist.

4. Elektrode nach einem der vorhergehenden Ansprüche, bei der die molare Masse des Polyethers zwischen 100 und 100 000 enthalten ist.

5. Elektrode nach einem der vorhergehenden Ansprüche, dadurch gekennzeichnet, daß das Salz in einem Anteil von zwischen 5 Gew.-% und 25 Gew.-% der Masse des Polymers zugefügt ist.

6. Elektrode nach einem der vorhergehenden Ansprüche, dadurch gekennzeichnet, daß das Salz von der Form $M^+X^-$ ist, wobei $M^+$ wenigstens ein unter $Li^+$, $Na^+$, $K^+$, $NH4^+$, $Mg^{2+}$, $Ca^{2+}$ ausgewähltes Kation und $X^-$ wenigstens ein unter $Cl_4^-$, $AsF_6^-$, $PF_6^-$, $BF_4^-$, $CF_3SO_3^-$, $N(CF_3SO_2)_2^-$ und $C(CF_3SO_2)_3^-$ ausgewähltes Anion ist.

7. Elektrode nach einem der vorhergehenden Ansprüche, dadurch gekennzeichnet, daß der Anteil der ersten Verbindung zwischen 2 und 50 Gew.-% des Gemischs von erster und zweiter Verbindung enthalten ist.

8. Elektrode nach einem der vorhergehenden Ansprüche, dadurch gekennzeichnet, daß die erste Verbindung unter Rußschwarz, Aktivkohle und Graphit ausgewählt ist.

9. Verfahren zur Realisierung einer Elektrode nach einem der vorhergehenden Ansprüche, bei der die zweite Verbindung hergestellt wird durch Umsetzen eines Polyethers mit zwei primären endständigen Aminfunktionen mit Schwefelmonochlorid in Gegenwart von Triethylamin.

10. Elektrochemische Lithiumbatterie mit einer Elektrode nach einem der Ansprüche 1 bis 8.

## Claims

1. An electrode for an electrochemical primary cell, the electrode comprising a first electron conducting compound and a second ion conducting compound which consists of a sulfur-containing polymer with a repeating unit which includes a polyether, and which can contain an ionizable salt, characterized in that said second compound further performs the function of an electroactive material, the backbone of said polymer containing sulfur-sulfur bonds which render it capable of reversible oxidation and reduction.

2. An electrode according to claim 1, wherein said repeating unit is a polyether of the following type, containing two sulfur-containing ternary amine terminal groups:

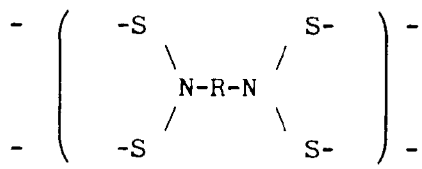

where R is a polyether.

**3.** An electrode according to claim 1 or 2, wherein said polyether is selected from polyethylene oxide, polypropylene oxide and their statistical, alternating, block and graft polyether copolymers.

**4.** An electrode according to any preceding claim, wherein the molecular weight of said polyether is between 100 and 100 000.

**5.** An electrode according to any preceding claim, characterized in that said salt is added in a proportion of between 5% and 25% of the weight of the polymer.

**6.** An electrode according to any preceding claim, characterized in that said salt is of the type $M^+X^-$, where $M^+$ is at least one cation selected from $Li^+$, $Na^+$, $K^+$, $NH_4^+$, $Mg^{2+}$, $Ca^{2+}$, and $X^-$ is at least one anion selected from $ClO_4^-$, $AsF_6^-$, $PF_6^-$, $BF_4^-$, $CF_3SO_3^-$, $N(CF_3SO_2)_2^-$, $C(CF_3SO_2)_3^-$.

**7.** An electrode according to any preceding claim, characterized in that said first compound is present in a proportion of between 2% and 50% by weight of the mixture of said first and said second compounds.

**8.** An electrode according to any preceding claim, characterized in that said first compound is selected from carbon black, activated carbon and graphite.

**9.** A method of producing an electrode according to any preceding claim, wherein said second compound is prepared by reacting a polyether containing two primary amine terminal groups with sulfur monochloride in the presence of triethylamine.

**10.** A lithium cell including an electrode according to any one of claims 1 to 8.

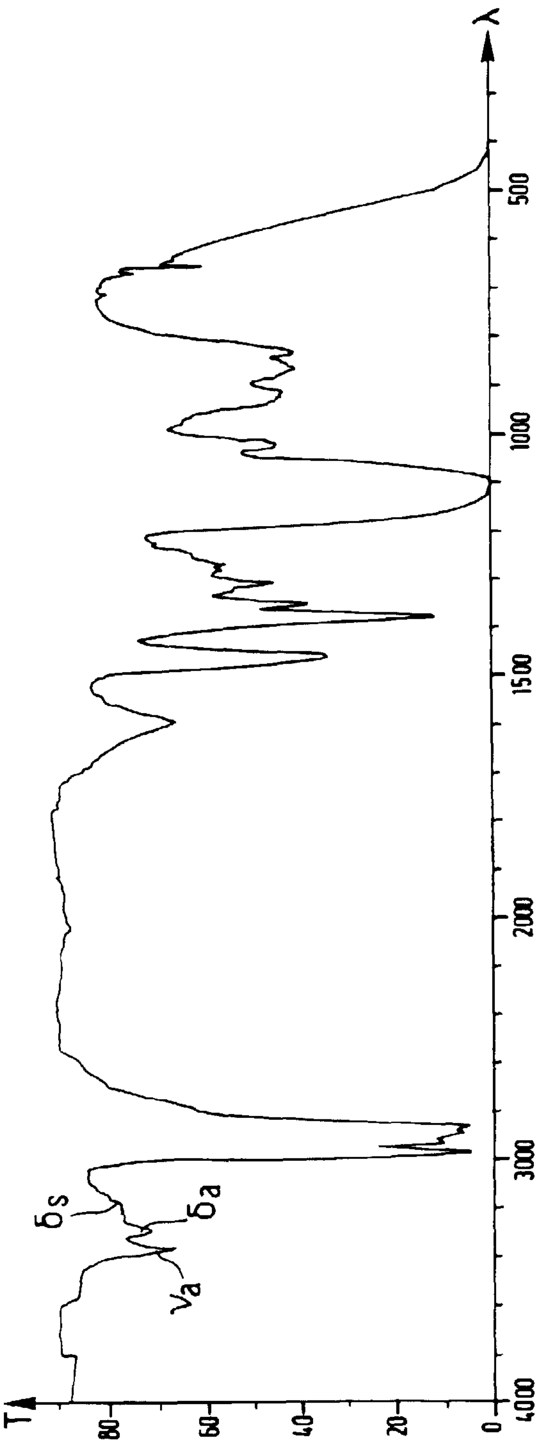

T
80
60
40
20
0
4000
3000
2000
1500
1000
500
λ
δs
δa
νa


FIG. 1A

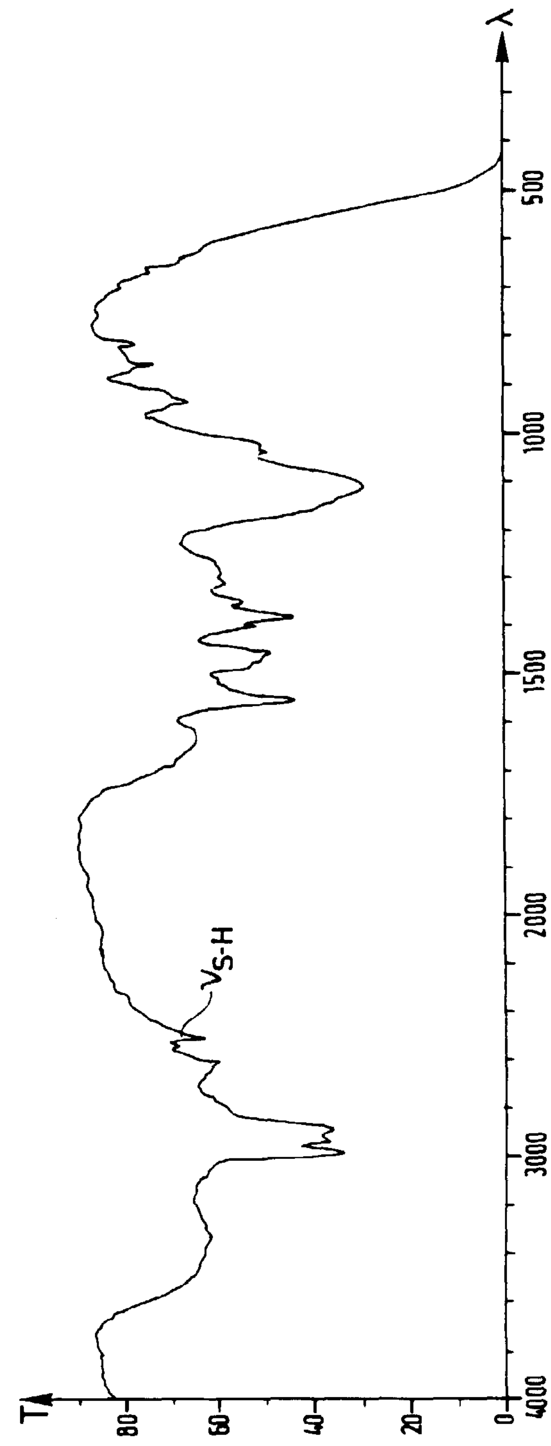

T
80
60
40
20
0
4000
3000
2000
1500
1000
500
λ
νS-H


FIG. 1B

FIG.2A

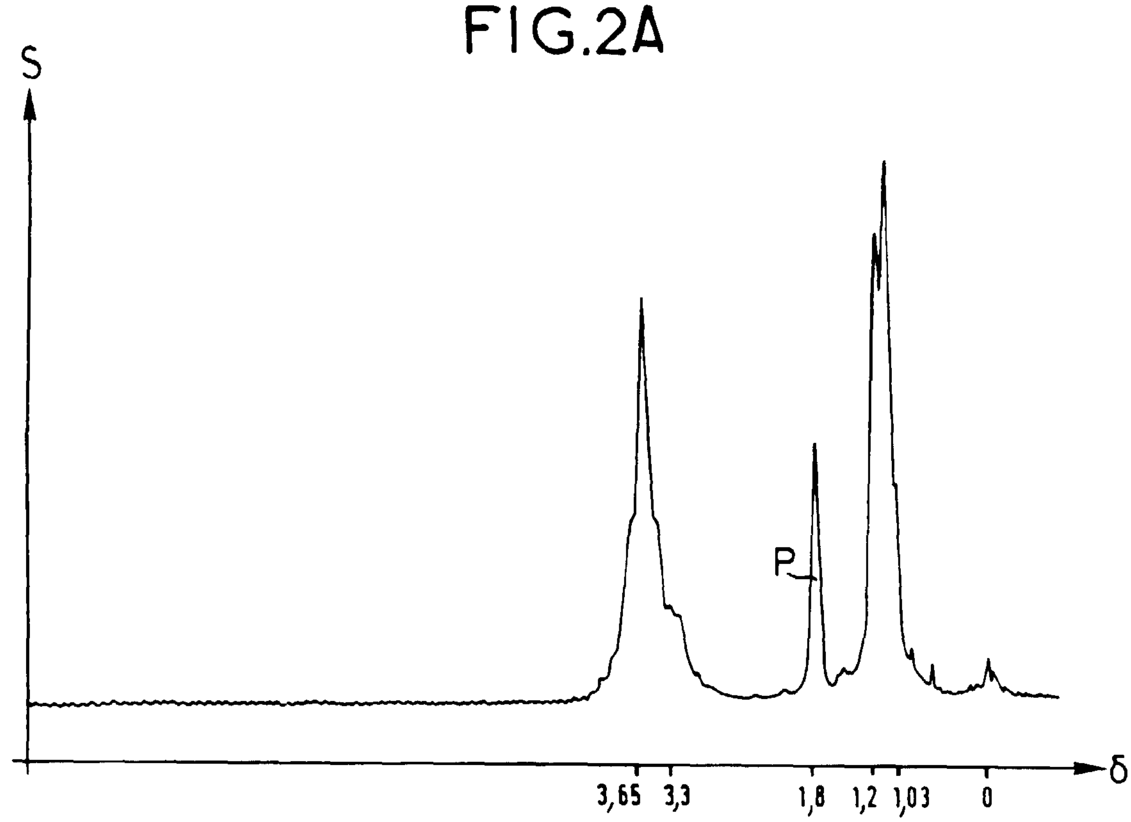


FIG.2B

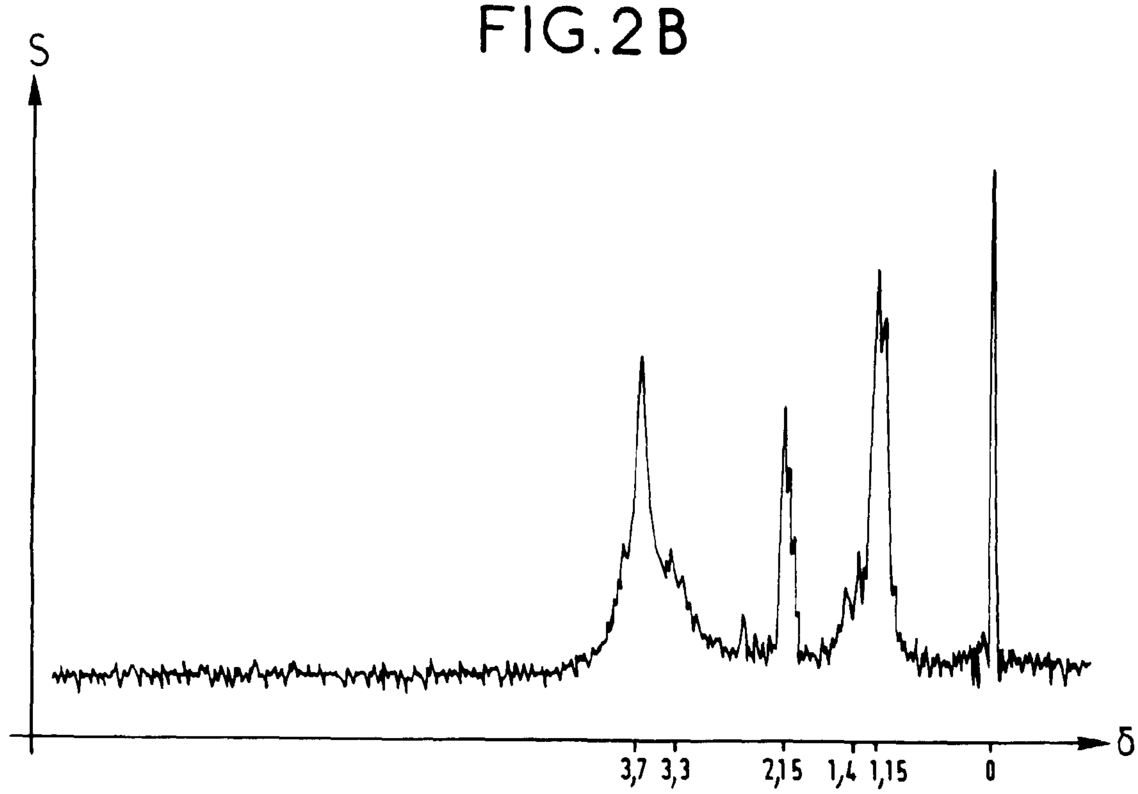

FIG.3

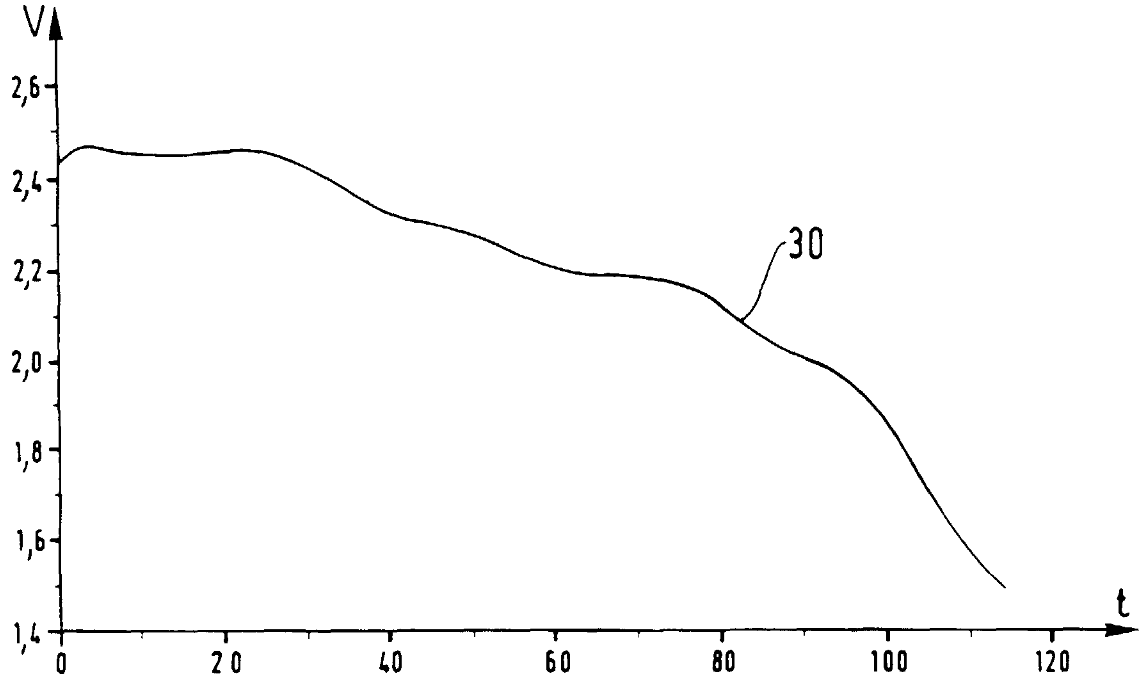
V
2,6
2,4
2,2
2,0
1,8
1,6
1,4
0
20
40
60
80
100
120
t
30

FIG.6

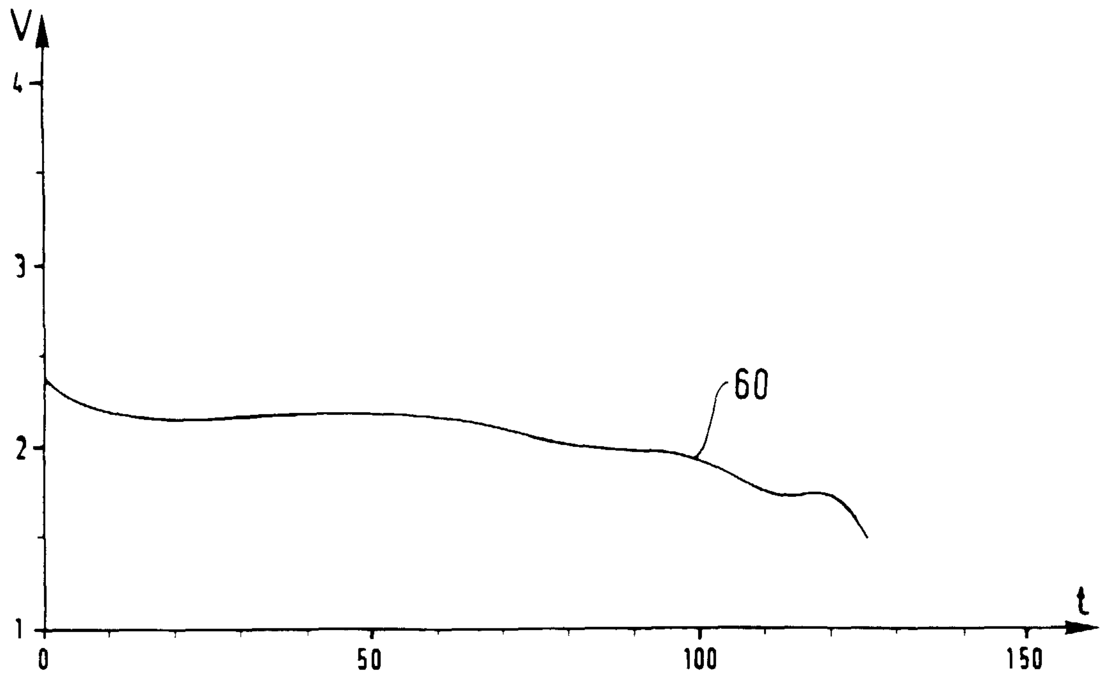
V
4
3
2
1
0
50
100
150
t
60

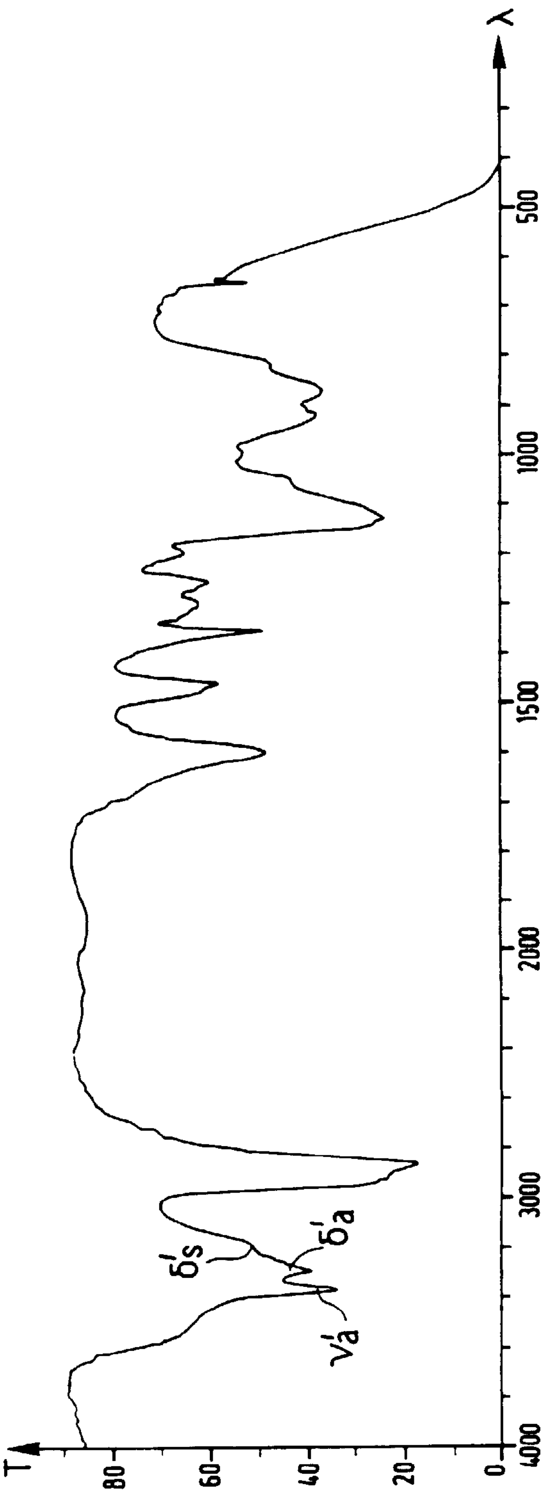
T
80
60
40
20
0
4000
3000
2000
1500
1000
500
λ
δ's
δ'a
ν'a

FIG. 4A

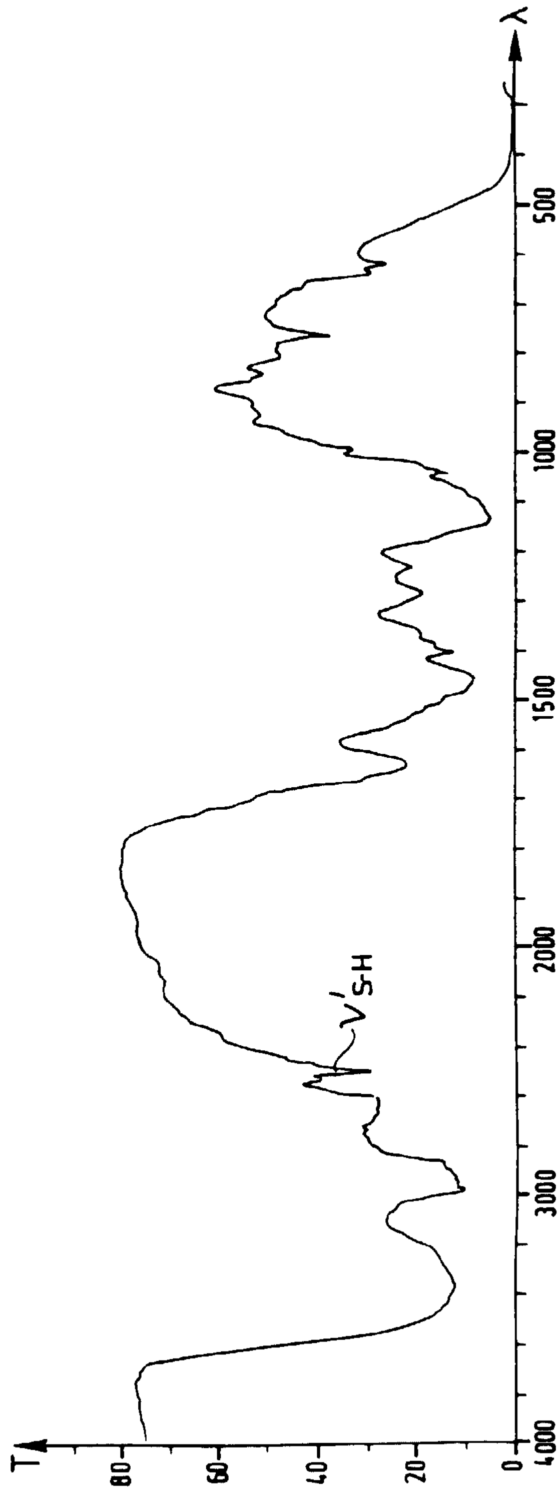
T
80
60
40
20
0
4000
3000
2000
1500
1000
500
λ
ν'S-H

FIG. 4B

FIG.5A

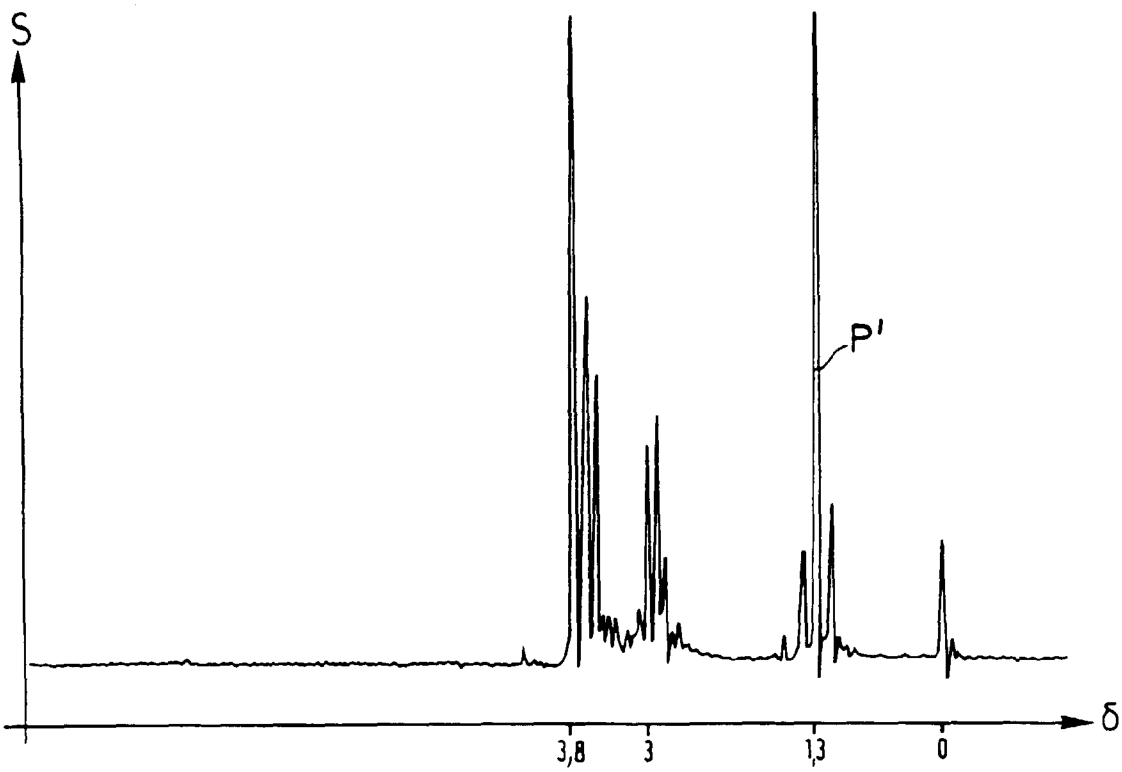


FIG.5B

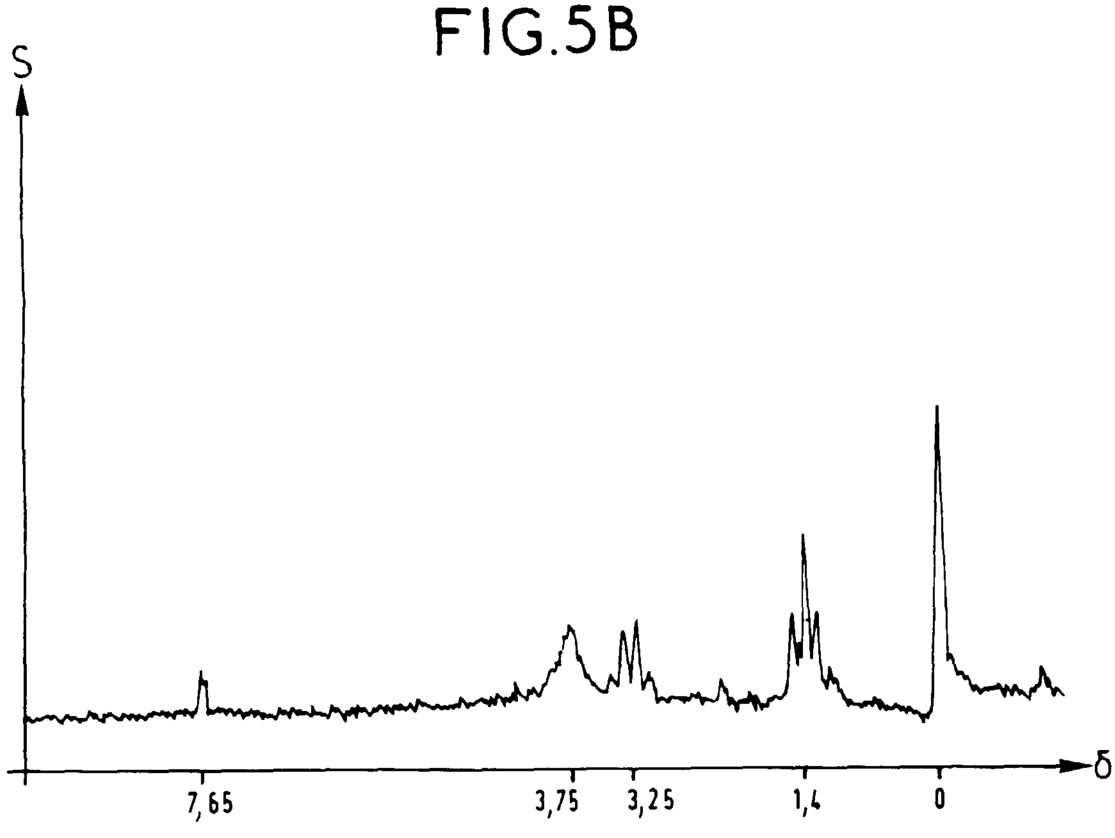

FIG.7

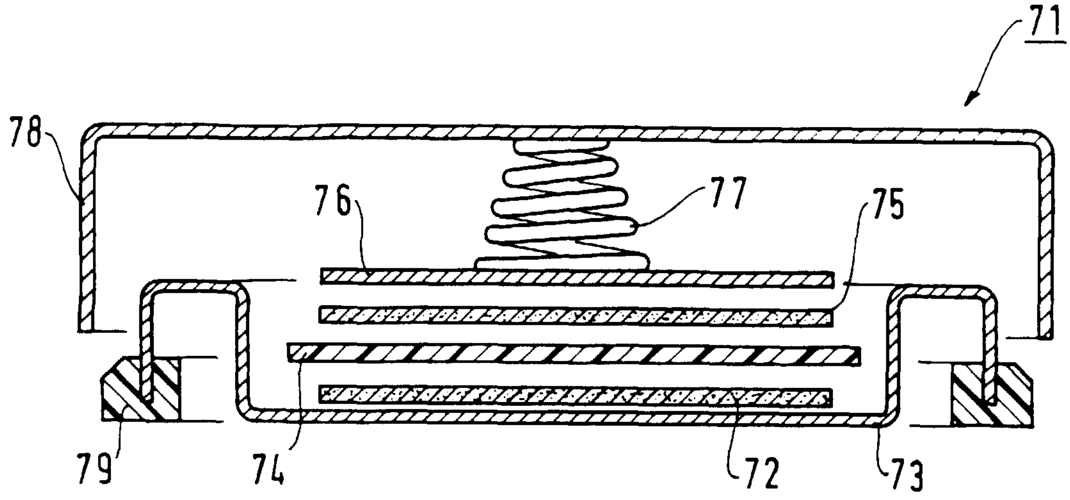


FIG.8